# EUROPEAN PATENT SPECIFICATION

(11) **EP 2 272 720 B1**
(45) Date of publication and mention of the grant of the patent: **16.10.2013**
(21) Application number: 10168906.5
(22) Date of filing: 08.07.2010
(51) Int. Cl.: B60R 16/027, B60Q 1/14

(54) **Steering module**
Lenkmodul
Module de direction

(30) Priority: 10.07.2009 JP 2009163973
(43) Date of publication of application: 12.01.2011
(73) Proprietor: Alps Electric Co., Ltd., Tokyo 145-8501 (JP)
(72) Inventor: Goto, Yuki, Tokyo Tokyo 145-8501 (JP)
(74) Representative: Klunker . Schmitt-Nilson . Hirsch

(56) References cited:
- DE-A1- 19 711 561
- JP-A- 2008 074 379
- US-A1- 2006 146 860

## Description

### BACKGROUND OF THE INVENTION

### 1. Field of the Invention

The present invention relates to a steering module as a unit formed by incorporating a rotary connector and a stalk switch in a housing as an outer shell of a combination switch, and more particularly, to a connection structure for electrically coupling the rotary connector and the stalk switch with a connector at a vehicle body side.

### 2. Description of the Related Art

The rotary connector serves as an electric coupling element for transfer from an airbag inflator and a horn circuit installed in a steering wheel to a vehicle body side, which is generally formed of a rotor member rotatably linked with the steering wheel, a stator member which rotatably supports the rotor member, and a flexible cable stored and wound in an annular space defined by the rotor member and the stator member.

It is well known that the stator member of the rotary connector incorporated in a steering device of a vehicle is generally mounted on an upper surface of a housing of the combination switch installed in the steering device for combining the rotary connector and the combination switch into a single unit as a steering module. In the steering module of the aforementioned type, a pair of stalk switches for allowing the directional indication and windshield wiper operation are provided at both sides of the housing, respectively, and a circuit substrate is also provided on an inner bottom portion of the housing. Connectors disposed at proximal end portions of the stalk switches, and a fixed side connector provided on the stator member of the rotary connector are designed to be directly coupled with the connectors provided on the circuit substrates.

Japanese Unexamined Patent Application Publication No. 2008-74379 discloses the steering module having the rotary connector and the steering angle sensor integrated into a two-staged unit as upper and lower sections, which is installed on the upper surface of the housing of the combination switch. In the aforementioned case, the steering angle sensor is used as a rotation information detection unit for detecting the steering angle of the steering wheel, and is generally formed of the rotor member with a code plate on the outer circumferential surface, the stator member for rotatably supporting the rotor member, and a detection element disposed opposite the code plate such as a photo interrupter. The rotary connector and the steering angle sensor are combined into a unit structure by fixing the respective stator members using screws in the state where the respective rotor members are connected while aligning axial centers of those rotor members with each other.

In the generally employed steering module which allows the rotary connector to be directly mounted, or indirectly mounted on the upper surface of the combination switch housing via the steering angle sensor, the rotary connector and the stalk switches are basically designed to be electrically coupled with the vehicle body side through the circuit substrate as a relay in the housing. In other words, plural outer circuit connector pins which allow the vehicle body side connectors to be fitted are provided to protrude from the lower surface of the circuit substrate. Those outer circuit connector pins are connected to the CPU and the respective connectors at the upper surface side of the circuit substrate via the wiring pattern on the circuit substrate. The structure allows signals from the rotary connector and the stalk switches to be processed by the CPU and output to the vehicle body side via the corresponding outer circuit connector pins. The signal path for airbag, on which high current flows tends to be applied to the dedicated connector which protrudes in a lateral direction to the stator member of the rotary connector without passing the fixed side connector. This makes it possible to improve safety, and make the circuit substrate structure compact.

In the generally employed steering module structured to output signals of the rotary connector other than those for the airbag, and signals of the stalk switches to the vehicle body side via the circuit substrate disposed in the housing of the combination switch, a protective part such as a thermistor is inserted in the wiring pattern on the circuit substrate as the path for the aforementioned signals so as to prevent short-circuit owing to overcurrent. A part (signals for horn circuit) of those signals may be directly output to the vehicle body side without being processed by the CPU. There is no reason to form the path for the aforementioned signals on the circuit substrate, and to insert the protective part therein. The generally employed steering module is, thus, inconvenient and unprofitable electric coupling structure which may interfere with the aim for reducing the cost of the circuit substrate including the mounted component.

### SUMMARY OF THE INVENTION

The present invention provides a steering module with an electric coupling structure which promotes cost reduction.

The present invention provides a steering module which includes a housing having an open upper surface and a through hole in a center, through which a steering shaft is inserted, a pair of stalk switches respectively attached to both sides of the housing, a circuit substrate provided inside the housing around the through hole, and a rotary connector provided above the circuit substrate. Plural connectors are provided on an upper surface of the circuit substrate, plural connector pins electrically coupled with the plural connectors are provided on a lower surface of the circuit substrate to protrude downward, and the stalk switches and the rotary connector are connected to the plural connectors, respectively. The rotary connector is provided with a first direct connector with plural outer connector terminals and a second direct connector connected to a part of the plural connectors, which are closely located and protrude downward. Terminal insertion holes are formed in the circuit substrate, through which the plural outer connector terminals are inserted. The housing is provided with a connector cover portion which exposes the plural outer connector terminals and the plural connector pins inside.

The thus structured steering module allows the first direct connector of the rotary connector to be directly connected to the outer connector without passing the circuit substrate by attaching the outer connector to the connector cover portion of the housing. Accordingly, the path of the signal output to the first direct connector does not have to be formed on the circuit substrate. The protective component such as the thermistor does not have to be inserted in the signal path as well, thus promoting cost reduction. Casings of the first and the second direct connectors may be continuously formed, thus preventing complicated structure of the stator member of the rotary connector. The steering module can be easily made compact. Signals from the second direct connector and the stalk switches to the corresponding connectors on the circuit substrate are output to the group of the connector pins as output terminals after processing by the CPU of the circuit substrate. The group of outer connector terminals of the first direct connector is disposed near the group of the connector pins. Those groups of the connector pins and the outer connector terminals may be connected to a common outer connector (vehicle body side connector), thus easily performing the electric coupling operation.

When the plural outer connector terminals include ground terminals in the aforementioned structure, the steering module cost may further be reduced.

Preferably in the aforementioned structure where a casing of the first direct connector protrudes downward to be longer than a casing of the second direct connector by an amount corresponding to a height of the first connector to which the second direct connector is connected, the first and the second direct connectors may be arranged at the predetermined positions, respectively with high accuracy when attaching the rotary connector to the circuit substrate.

The steering module according to the present invention allows the first direct connector of the rotary connector to be directly connected to the outer connector without passing the circuit substrate. As a result, the signal path through which the signal is output to the first direct connector does not have to be formed on the circuit substrate. The protective part such as the thermistor does not have to be inserted in the signal path as well, thus promoting the cost reduction. The respective casings of the first and the second direct connectors may be continuously formed to simplify the structure of the stator member of the rotary connector. The structure promotes to make the steering module compact.

### BRIEF DESCRIPTION OF THE DRAWINGS

Fig. 1 is an exploded perspective view of a steering module according to an embodiment of the present invention;
Fig. 2 is an exploded perspective view of an essential portion of the steering module shown in Fig. 1 when seen from a lower surface side;
Fig. 3 is a perspective view showing a state where a circuit substrate is incorporated in a housing of the steering module;
Fig. 4 is a plan view corresponding to Fig. 3;
Fig. 5 is an explanatory view schematically showing a state just before attachment of a rotary connector to the circuit substrate of the steering module;
Fig. 6 is an explanatory view schematically showing a state where the rotary connector is attached to the circuit substrate; and
Fig. 7 is an explanatory view corresponding to Fig. 6 illustrating the steering module including the housing.

### DESCRIPTION OF THE PREFERRED EMBODIMENTS

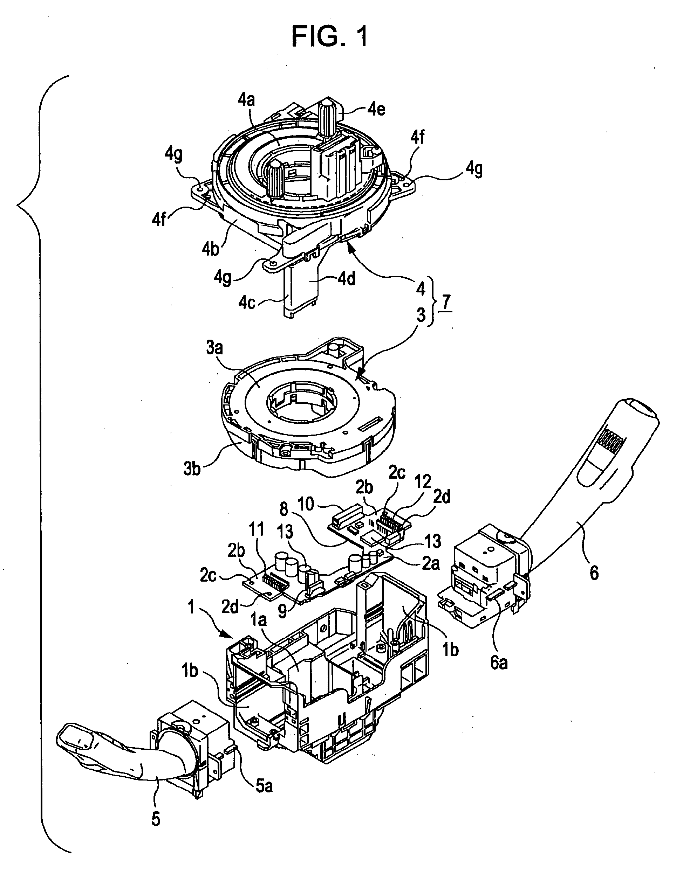

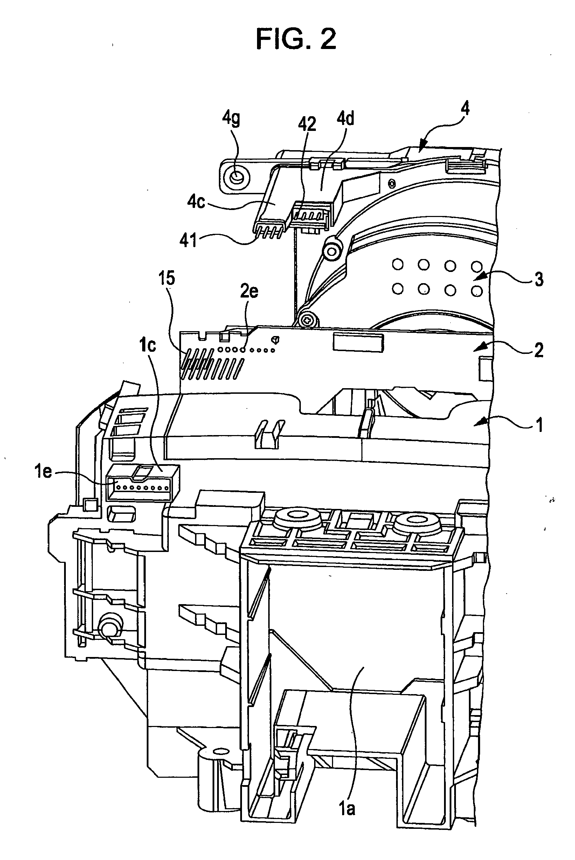

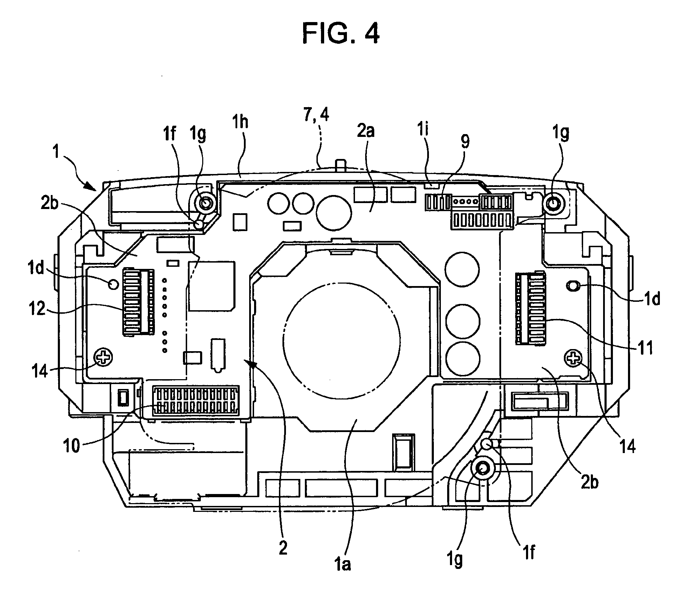

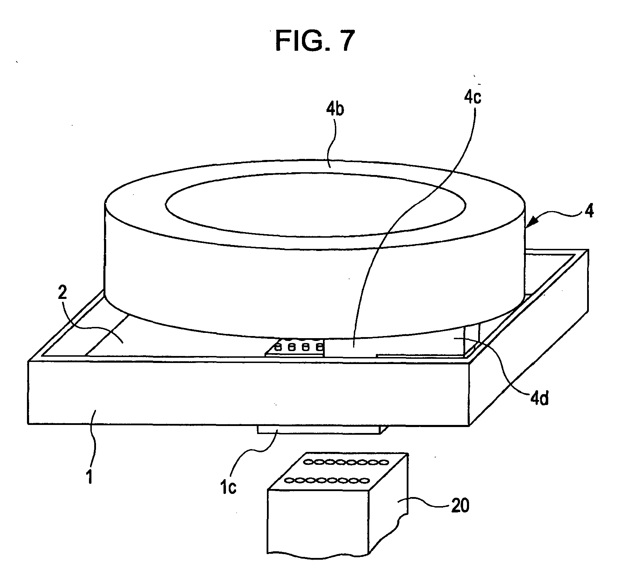

An embodiment of the present invention will be described referring to Figs. 1 to 7. Referring to the exploded perspective view of Fig. 1, a steering module according to the embodiment is formed of a synthetic resin housing 1, a circuit substrate 2 mounted on an inner bottom surface of the housing 1, a steering angle sensor 3 provided above the circuit substrate 2, a rotary connector 4 disposed above the steering angle sensor 3, and stalk switches 5, 6 attached to left and right sides of the housing 1. The steering angle sensor 3 and the rotary connector 4 are vertically stacked into a unit body 7 in two stages as lower and upper sections. The housing 1 is fixed to a steering column of a vehicle to form an outer shell of the combination switch. The housing 1 is box-like shaped having an open upper surface and a closed bottom. A through hole 1a is formed in the center of the inner bottom surface of the housing 1 such that the steering shaft is inserted into the through hole 1a. Both side surfaces of the housing 1 along the lateral direction are opened as insertion holes 1b, an inlet of each inner bottom surface of which has a protrusion 1d. Referring to Fig. 2, a connector cover portion 1c is formed on the lower surface of the housing 1 so as to allow a vehicle body side connector 20 (see Fig. 7) electrically coupled with the steering angle sensor 3, the rotary connector 4, the stalk switches 5,6 and the like to be fitted. The inner bottom surface surrounded by the connector cover portion 1c has plural positioning holes 1e formed in a predetermined arrangement, through which connector pins 15 extending downward from the circuit substrate 2 and outer connector terminals 41 extending downward from the rotary connector 4 are inserted. Those groups of the connector pins 15 and the outer connector terminals 41 are exposed into the connector cover portion 1c. Referring to Fig. 4, a pair of guide pins 1f and three support columns 1g are formed to stand from the upper portion of the housing 1. Those guide pins 1f are oppositely positioned at approximately 180[deg.] with respect to the through hole 1a. A snap claw 1i is integrally formed with one side wall 1h of the housing 1 along a longitudinal direction. The snap claw 1i extends to form a cantilevered wedge shape from the upper to the lower portion of the side wall 1h. A corner portion which reaches the side wall 1h from the inner bottom surface of the housing 1 and the proximal circumferential edge portion of the protrusion 1d become positions on which the circuit substrate 2 is mounted, and accordingly, are positioned in the same plane.

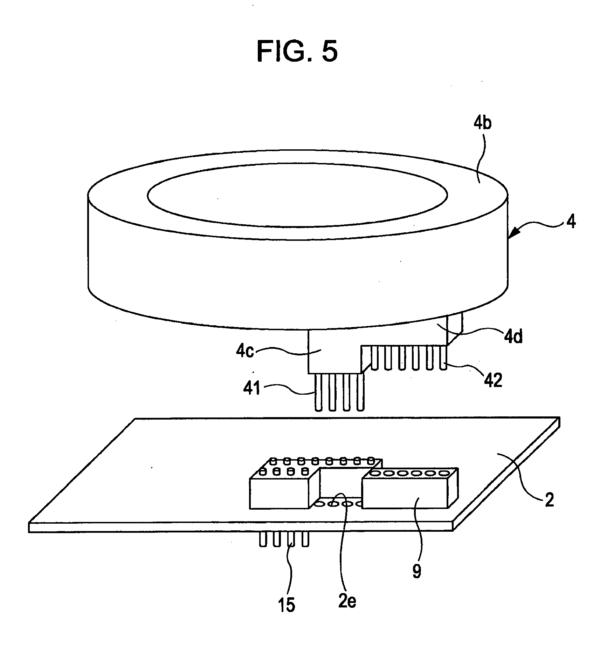

The circuit substrate 2 includes a narrow portion 2a interposed between wide portions 2b which are continuously formed. A steering shaft is inserted into a notch portion 8 defined by those narrow portion 2a and the wide portions 2b. Mount holes 2c and positioning holes 2d are formed at the respective edges of the wide portions 2b. Four connectors 9, 10, 11 and 12 are mounted on the upper surface of the circuit substrate 2. The respective connectors 9, 10, 11 and 12 will be designated as the first to the fourth connectors for purposes of explanation. The first connector 9 is used for connecting the rotary connector 4, the second connector 10 is used for connecting the steering angle sensor 3, the third connector 11 is used for connecting the stalk switch 5, and the fourth connector 12 is used for connecting the stalk switch 6, respectively. Referring to Figs. 2 and 5, the circuit substrate 2 has plural terminal insertion holes 2e for accommodating insertion of the outer connector terminals 41 each extending downward from the rotary connector 4, which are formed at the position near the first connector 9, and connector pins 15 each extending downward at the position adjacent to those terminal insertion holes 2e. Electric components 13 such as the resistance, capacitor and CPU are mounted on the circuit substrate 2, and a not shown wiring pattern is formed thereon. The first to the fourth connectors 9 to 12 are electrically coupled with the connector pins 15 via the wiring pattern.

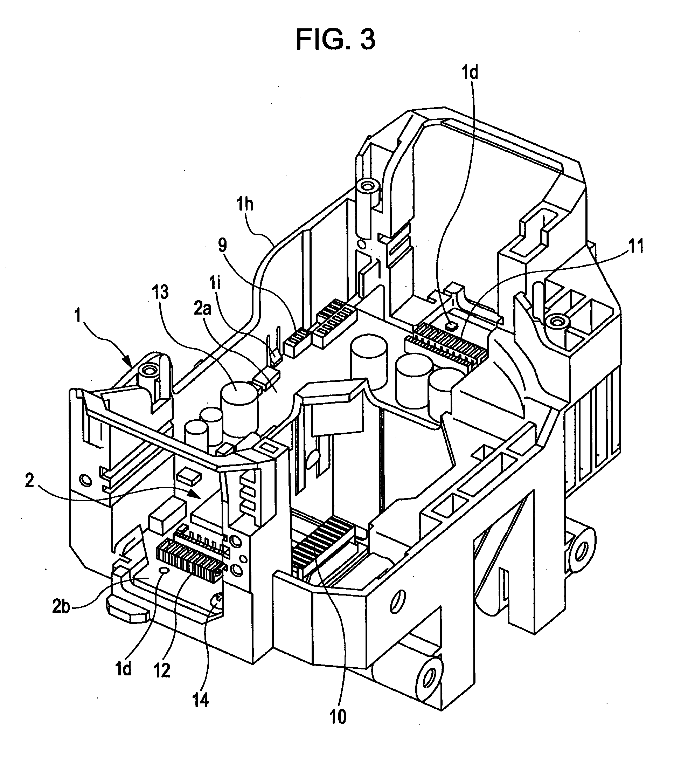

Referring to Figs. 3 and 4, both the wide portions 2b of the circuit substrate 2 are screwed to the inner bottom surface of the housing 1 using screws 14. The upper surface edge of the narrow portion 2a of the circuit substrate 2 is fitted in the snap claw 1i formed on the side wall 1h of the housing 1. This allows the first connector 9 to be arranged opposite the second connector 10 with respect to the notch portion 8 (through hole 1a), and the third and the fourth connectors 11, 12 to be arranged around the inlets of the insertion holes 1b.

The steering angle sensor 3 is used as a rotation information detection unit for detecting the steering angle of the steering wheel. The steering angle sensor 3 is provided with a rotor member 3a with a hollow shaft structure having a not shown code plate on the outer circumferential surface, a stator member 3b for rotatably supporting the rotor member 3a, and a not shown detection element stored inside the stator member 3b. A not shown fixed side connector for outer connection is provided on the lower surface of the stator member 3b.

The rotary connector 4 is used as an electric coupling unit for transfer from switches, airbag inflator and horn circuit installed in the steering wheel to the vehicle body side. The rotary connector 4 is provided with a rotor member 4a with a hollow shaft structure connected to the steering wheel, a stator member 4b for rotatably supporting the rotor member 4a, and a not shown flexible cable stored and wound in an annular space defined by the rotor member 4a and the stator member 4b. The stator member 4b includes a first direct connector 4c as the fixed side connector for outer connection, which has plural outer connector terminals 41 drawn from the horn circuit and the ground circuit, and a second direct connector 4d which has plural outer connector terminals 42 drawn from various switch circuits installed in the steering wheel so as to be connected to the first connector 9 on the circuit substrate 2, both of which protrude downward. A laterally extending third direct connector 4e for airbag is also provided.

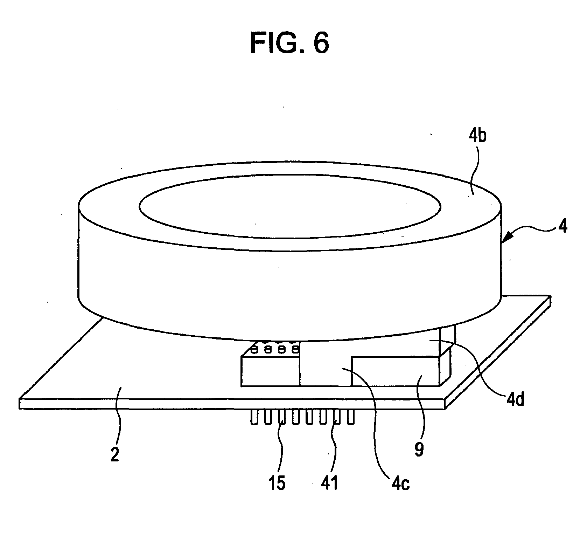

The first direct connector 4c and the second direct connector 4d have the respective casings connected with each other. The casing of the first direct connector 4c extends downward to be longer than the casing of the second direct connector 4d by the amount corresponding to height of the first connector 9. That is, as shown in Fig. 5, the casings of the first and the second direct connectors 4c, 4d are integrally formed into a predetermined shape having a stepped portion corresponding to the height of the first connector 9. The outer connector terminals 41 of the first direct connector 4c are disposed inside the connector cover portion 1c through the terminal insertion holes 2e and the positioning holes 1e, and as shown in Fig. 6, each leading end of the outer connector terminals 41 is located at the height which is substantially the same as that of each leading end of the respective connector pins 15. Meanwhile, the outer connector terminals 42 of the second direct connector 4d are electrically coupled with the connector pins 15 via the wiring pattern of the circuit substrate 2.

A flange portion of the rotary connector 4, which extends radially outward of the stator member 4b has a pair of guide holes 4f through which the guide pin 1f of the housing 1 is inserted, and three mount holes 4g fixed to the support column 1g of the housing 1 with screws. The rotary connector 4 is provided with a not shown stopper member for interrupting free rotation of the rotor member 4a so as to be held in its rotary neutral position until it is connected to the steering wheel.

The steering angle sensor 3 and the rotary connector 4 are combined while having the respective axial centers of the rotor members 3a, 4a aligned and fixing the stator members 3b, 4b using snaps and screws for forming a single unit body 7 in two stages as upper and lower sections. The fixed side connector formed on the steering angle sensor 3 as the lower section is positioned on the lower surface of the unit body 7, and cannot be seen from above. However, the first and the second direct connectors 4c, 4d formed on the rotary connector 4 as the upper section extend downward while passing the outer side of the stator member 3b of the steering angle sensor 3. Upon combination of the unit body 7 into the housing 1 from above, the outer connector terminals 41 of the first direct connector 4c of the rotary connector 4 pass through the terminal insertion holes 2e of the circuit substrate 2 so as to be disposed in the connector cover portion 1c. The second direct connector 4d is directly coupled with the first connector 9 on the circuit substrate 2, and the not shown fixed side connector of the steering angle sensor 3 is also directly coupled with the second connector 10 on the circuit substrate 2. Thereafter, not shown screws are inserted into the respective mount holes 4g of the rotary connector 4 so as to be fixed to the support column 1g of the housing 1. The unit body 7 is fixed to the housing 1 in the aforementioned way.

At the time point when the guide pins 1f of the housing 1 are inserted in both guide holes 4f of the rotary connector 4 in the process for combining the unit body 7, the unit body 7 is horizontally positioned with the pair of guide pins 1f, and the first and the second direct connectors 4c, 4d are positioned in the rotating direction. The first and the second direct connectors 4c, 4d of the rotary connector 4, and the fixed side connector of the steering angle sensor 3 are ensured to be guided to the predetermined positions on the circuit substrate 2 by pushing the unit body 7 inward of the housing 1 in the aforementioned state. In other words, this ensures to dispose the outer connector terminals 41 of the first direct connector 4c within the connector cover portion 1c through the terminal insertion holes 2e and the positioning holes 1e, and to connect the outer connector terminals 42 of the second direct connector 4d to the first connector 9. This also ensures the fixed side connector of the steering angle sensor 3 to be connected to the second connector 10. As the first connector 9 and the second connector 10 are electrically coupled with the connector pins 15 via the wiring pattern on the circuit substrate 2, respective signals of the rotary connector 4 and the steering angle sensor 3 output to those connectors 9 and 10 are processed by the CPU so as to be further output to the vehicle body side from the corresponding connector pins 15.

The stalk switch 5 serves as a wiper switch for wiping operations, and the other stalk switch 6 serves as a turn signal switch for giving a turn signal. Horizontally extending guide protrusions 5a, 6a are formed on proximal side surfaces of those stalk switches 5, 6. Not shown connectors for outer connection are provided on the proximal lower surfaces of the stalk switches 5, 6. The respective proximal portions of the stalk switches 5, 6 are inserted into the insertion holes 1b from both outer sides of the housing 1 so as to guide the guide protrusions 5a, 6a to the insertion direction such that the stalk switches 5, 6 are fitted in the left and right sides of the housing 1. Not shown connectors of the stalk switches 5, 6 are directly coupled with the third and the fourth connectors 11, 12 on the circuit substrate 2, respectively. Since the third and the fourth connectors 11, 12 are electrically coupled with the connector pins 15 via the wiring pattern on the circuit substrate 2, the respective signals of the stalk switches 5, 6 output to the third and the fourth connectors 11, 12 are processed by the CPU so as to be further output to the vehicle body side from the corresponding connector pins 15.

The steering module formed by combining the housing 1 with the unit body 7 (the steering angle sensor 3 and the rotary connector 4) and the pair of stalk switches 5, 6 is incorporated in the steering device of the vehicle in the state where the housing 1 is fixed to the steering column and the rotor member 4a of the rotary connector 4 is connected to the steering wheel. At this moment, the aforementioned stopper member is removed from the rotary connector 4 to make the rotor members 3a, 4a of the steering angle sensor 3 and the rotary connector 4 rotatable with respect to the stator members 3b, 4b, respectively. When the driver turns the steering wheel clockwise or counter clockwise while driving, the rotor members 3a, 4a rotate together in association with the rotation of the steering wheel to activate the rotary connector 4 and the steering angle sensor 3, respectively. That is, the not shown flexible cable of the rotary connector 4 is wound or rewound as the rotor member 4a rotates. The not shown detection element of the steering angle sensor 3 outputs the detection signal corresponding to the rotation amount as the rotor member 3a rotates.

In the steering module according to the embodiment, the stator member 4b of the rotary connector 4 is provided with the first direct connector 4c and the second direct connector 4d which protrude downward therefrom. As the first direct connector 4c may be directly electrically coupled with the vehicle body side connector (outer connector) 20 without passing the circuit substrate 2, the path of signals of the horn circuit and the ground circuit to be output to the first direct connector 4c does not have to be provided on the circuit substrate 2. Furthermore, the protective part such as the thermistor does not have to be inserted in the signal path. As the casings of the first direct connector 4c and the second direct connector 4d are connected with each other, the stator member 4b of the rotary connector 4 may be simply structured. The thus structured steering module may reduce the cost of the circuit substrate 2 including the mount components, and make the structure compact.

Meanwhile, the signals output from the second direct connector 4d, the steering angle sensor 3 and the stalk switches 5, 6 to the corresponding connectors 9, 10, 11 and 12 on the circuit substrate 2 are processed by the CPU of the circuit substrate 2, and further output to the connector pins 15 as the output terminals. A group of the outer connector terminals 41 of the first direct connector 4c is disposed around the group of the connector pins 15 in the connector cover portion 1c of the housing 1 such that the groups of the connector pins 15 and the outer connector terminals 41 may be connected to the common vehicle body side connector 20, resulting in easy electric coupling operation.

In the steering module according to the embodiment, the casing of the first direct connector 4c protrudes downward to be longer than the casing of the second direct connector 4d by the amount corresponding to the height of the first connector 9 to which the second direct connector 4d is connected. This makes it possible to easily bring the first and the second direct connectors 4c, 4d into the respective predetermined positions with high accuracy when attaching the rotary connector 4 to the circuit substrate 2. This also makes it possible to improve fitting operability and connection reliability of the rotary connector 4.

In the embodiment as described above, the respective outer connector terminals 41 of the first direct connector 4c are inserted into the respective terminal insertion holes 2e of the circuit substrate 2. However, plural outer connector terminals 41 may be inserted into the common insertion hole of the circuit substrate 2 collectively. The insertion hole may be formed as a long hole or a notch hole.

In the aforementioned embodiment, the steering module is formed by combining the unit body 7 integrally formed of the steering angle sensor 3 and the rotary connector 4 with the housing 1 of the combination switch. However, the present invention is applicable to the steering module having the steering angle sensor omitted.

## Claims

1. A steering module comprising:
a housing (1) having an open upper surface and a through hole (1a) in a center, through which a steering shaft is inserted;
a pair of stalk switches (5, 6) respectively attached to both sides of the housing (1);
a circuit substrate (2) provided inside the housing (1) around the through hole (1a); and
a rotary connector (4) provided above the circuit substrate (2), wherein:
plural connectors (9, 10, 11, 12) are provided on an upper surface of the circuit substrate (2), plural connector pins (15) electrically coupled with the plural connectors (9, 10, 11, 12) are provided on a lower surface of the circuit substrate (2) to protrude downward, and the stalk switches (5, 6) and the rotary connector (4) are connected to the plural connectors, respectively;
the rotary connector (4) is provided with a first direct connector (4c) with plural outer connector terminals (41) and a second direct connector (4d) connected to a part of the plural connectors (9, 10, 11, 12), which are closely located and protrude downward;
terminal insertion holes (2e) are formed in the circuit substrate (2), through which the plural outer connector terminals (41) are inserted; and
the housing (1) is provided with a connector cover portion (1c) which exposes the plural outer connector terminals (41) and the plural connector pins (15) inside.

2. The steering module according to Claim 1, wherein the plural outer connector terminals (41) include ground terminals.

3. The steering module according to Claim 1 or 2, wherein a casing of the first direct connector (4c) protrudes downward to be longer than a casing of the second direct connector (4d) by an amount corresponding to a height of the first connector (9) to which the second direct connector (4d) is connected.

## Patentansprüche

1. Steuermodul aufweisend:
ein Gehäuse (1) mit einer offenen oberen Fläche und einer Durchgangsöffnung (1a) in einem Zentrum, durch die eine Steuerwelle eingeführt ist;
ein Paar Lenkstockschalter (5, 6), die auf beiden Seiten des Gehäuses (1) angebracht sind;
eine Leiterplatte (2), die innerhalb des Gehäuses (1) um die Durchgangsöffnung (1a) angeordnet ist; und
einen Rotationsverbinder (4), der oberhalb der Leiterplatte (2) angeordnet ist, wobei:
mehrere Verbinder (9, 10, 11, 12) auf einer oberen Fläche der Leiterplatte (2) angeordnet sind; mehrere Verbindungsstifte (15), die elektrisch mit den mehreren Verbindern (9, 10, 11, 12) gekoppelt sind, auf einer unteren Fläche der Leiterplatte (2) angeordnet sind, um nach unten hervorzustehen; und die Lenkstockschalter (5, 6) und der Rotationsverbinder (4) jeweils mit den mehreren Verbindern verbunden sind;
der Rotationsverbinder (4) einen ersten Direktverbinder (4c) mit mehren äußeren Verbinderanschlüssen (41) und einen zweiten Direktverbinder (4d) umfasst, der mit einem Teil der mehreren Verbinder (9, 10, 11, 12) verbunden ist, die in der Nähe angeordnet sind und nach außen hervorstehen;
in der Leiterplatte (2) Anschlusseinfügeöffnungen (2e) ausgebildet sind, durch welche die mehreren äußeren Verbinderanschlüsse (41) eingeführt sind; und
das Gehäuse (1) mit einem Verbinderabdeckbereich (1c) ausgestattet ist, der die mehreren äußeren Verbinderanschlüsse (41) und die mehreren Verbinderstifte (15) im Inneren freilegt.

2. Steuermodul nach Anspruch 1, wobei die mehreren äußeren Verbinderanschlüsse (41) Masseanschlüsse einschließen.

3. Steuermodul nach Anspruch 1 oder 2, wobei das Gehäuse des ersten Direktverbinders (4c) nach unten hervorsteht, so dass es um eine Größe, die einer Höhe des ersten Verbinders (9), mit dem der zweite Direktverbinder (4d) verbunden ist, entspricht, länger als das Gehäuse des zweiten Direktverbinders (4d) ist.

## Revendications

1. Module de direction comprenant :
un boîtier (1) ayant une surface supérieure ouverte et un trou traversant (1a) au centre, dans lequel est inséré un arbre de direction ;
une paire de manettes de commutation (5, 6) fixées respectivement de chaque côté du boîtier (1) ;
un substrat de circuit (2) placé à l'intérieur du boîtier (1) autour du trou traversant (1a) ; et
un connecteur rotatif (4) placé au-dessus du substrat de circuit (2), dans lequel :
plusieurs connecteurs (9, 10, 11, 12) sont placés sur une surface supérieure du substrat de circuit (2), plusieurs broches de connecteur (15) couplées électriquement avec les différents connecteurs (9, 10, 11, 12) sont placés sur une surface inférieure du substrat de circuit (2) pour faire saillie vers le bas, et les manettes de commutation (5, 6) et le connecteur rotatif (4) sont connectés respectivement aux différents connecteurs ;
le connecteur rotatif (4) est pourvu d'un premier connecteur direct (4c) avec plusieurs bornes de connecteur extérieures (41) et d'un deuxième connecteur direct (4d) connecté à une partie des différents connecteurs (9, 10, 11, 12), qui sont en position proche et font saillie vers le bas ;
des trous d'insertion de bornes (2e) sont formés dans le substrat de circuit (2), dans lesquels sont insérées les différentes bornes de connecteur extérieures (41) ; et
le boîtier (1) est pourvu d'une partie formant couvercle de connecteur (1c) qui expose les différentes bornes de connecteur extérieures (41) et les différentes broches de connecteur (15) à l'intérieur.

2. Module de direction selon la revendication 1, dans lequel les bornes de connecteur extérieures (41) comprennent des bornes de terre.

3. Module de direction selon la revendication 1 ou 2, dans lequel un capot du premier connecteur direct (4c) fait saillie vers le bas de façon à être plus long qu'un capot du deuxième connecteur direct (4d), d'une distance correspondant à une hauteur du premier connecteur (9) auquel le deuxième connecteur direct (4d) est connecté.
